# EUROPÄISCHE PATENTANMELDUNG

(11) **EP 1 241 051 A2**
(43) Veröffentlichungstag der Anmeldung: **18.09.2002**
(21) Anmeldenummer: 02005083.7
(22) Anmeldetag: 07.03.2002
(51) Int. Cl.: B60Q 1/30, B60D 1/62

(54) **Strassenfahrzeug mit Anhänger**

(30) Priorität: 16.03.2001 DE 10112715
(71) Anmelder: DaimlerChrysler AG, 70567 Stuttgart (DE)
(72) Erfinder: Dickmann, Jürgen, Dr., 89079 Ulm (DE)

(57) **Zusammenfassung**

Die Erfindung betrifft ein Straßenfahrzeug 1 bzw. einen Anhänger 3 bzw. ein Straßenfahrzeug 1 mit einem Anhänger 3, bei denen das Straßenfahrzeug 1 mit einem Nahbereichsfunkgerät 2 und der Anhänger 3 mit einem entsprechenden Nahbereichsfunkgerät 4 zur Schaffung einer Funkverbindung zur Übertragung von Steuerdaten zwischen dem Straßenfahrzeug 1 und dem Anhänger 3 versehen sind.

## Beschreibung

Die Erfindung betrifft ein Straßenfahrzeug bzw. einen Anhänger für ein Straßenfahrzeug. Diese sind im verbundenen Zustand neben der mechanischen Kupplung zur Übertragung der Zugkräfte über ein sehr steifes Kabel zur Übertragung elektrischer Energie und elektrischer Signale miteinander verbunden. Dieses Kabel ist lösbar ausgebildet, so daß der Anhänger von dem Straßenfahrzeug getrennt abgestellt werden kann und das Straßenfahrzeug unabhängig von dem Anhänger betrieben werden kann. Die Verbindung ist dahingehend standardisiert ausgebildet, daß verschiedene Anhänger an verschiedene Straßenfahrzeuge angekoppelt werden können. Über das Kabel werden insbesondere Sensordaten an das Führerhaus oder Steuersignale zur Betätigung der Beleuchtung, insbesondere Blinklichter, Bremslichter oder auch zur Betätigung der Längs- oder Querregelung des Anhängers bzw. des Strassenfahrzeuges übertragen. Diese Kabel sind sehr anfällig und können nicht diebstahlsicher ausgelegt werden.

Der Erfindung liegt die Aufgabe zugrunde, ein Straßenfahrzeug bzw. einen Anhänger zu schaffen, welche eine weniger anfällige Übertragung von Steuersignalen ermöglichen.

Diese Aufgabe wird erfindungsgemäß gelöst durch ein Strassenfahrzeug mit den Merkmalen des Anspruchs 9, einen Anhänger mit den Merkmalen des Anspruchs 10 und ein Straßenfahrzeug mit wenigstens einem Anhänger mit den Merkmalen des Anspruchs 1.

Vorteilhafte Weiterbildungen sind Gegenstand der Unteransprüche 2 bis 8.

Gemäß der Erfindung wird das Straßenfahrzeug mit einem Nahbereichsfunkgerät und der Anhänger mit einem entsprechenden Nahbereichsfunkgerät versehen. Dabei wird mittels der Nahbereichsfunkgeräte die Möglichkeit geschaffen, Steuerdaten und andere Daten über die Funkverbindung zwischen den beiden Nahbereichsfunkgeräten von dem Straßenfahrzeug zu dem Anhänger oder umgekehrt zu übertragen. Damit gelingt es, die störanfällige mechanische und elektrische Kupplung von Kabeln zur Übertragung von Steuersignalen zwischen dem Straßenfahrzeug und seinem Anhänger oder seinen Anhängern überflüssig zu machen. Insbesondere erweist sich die erfindungsgemäße Ausbildung als wenig anfällig gegen Korrosion, wie sie beispielsweise durch Streusalz bedingt ist. Erfindungsgemäß werden Nahbereichsfunkgeräte verwendet, die eine sehr begrenzte Reichweite aufweisen. Diese zeigen eine Reichweite von wenigen Metern, insbesondere weniger als 20 Meter. Dadurch ist sichergestellt, dass eine Beeinträchtigung anderer Verkehrsteilnehmer durch die Übertragung von Daten zwischen dem Straßenfahrzeug und seinem Anhänger weitgehend ausgeschlossen sind. Dies ist insbesondere dann sichergestellt, wenn die Nahbereichsfunkgeräte so gewählt oder so ausgebildet sind, daß ihre Reichweite unter 10 Meter liegt. Weiterhin ist es durch die Wahl des Übertragungsweges über Funk möglich, daß ein Fahrer den Ankopplungsvorgang zwischen Straßenfahrzeug und Anhänger durch den Wegfall des Verbindens der elektrischen Kabel mit ihren anfälligen Kupplungen erheblich beschleunigen kann, was insbesondere für Speditionen von besonderer Bedeutung ist.

Als Straßenfahrzeuge kommen Pkw's, Kleinlastwagen und schwere Lastwagen sowie Zugmaschinen oder Traktoren und als Anhänger unter anderem Wohnanhänger, Lkw-Anhänger oder Auflieger in Frage. Die Erfindung ist nicht auf diese Straßenfahrzeuge bzw. Anhänger beschränkt.

Wird der mechanische Ankopplungsvorgang zwischen dem Strassenfahrzeug und seinem Anhänger oder seinen Anhängern durch entsprechende Wahl der Anhängerkupplung automatisiert, also ohne zusätzliche Handbetätigung durch den Fahrer oder Beifahrer ermöglicht, so gelingt es durch die Erfindung, ein zusätzliches Koppeln der Steuerleitungen zwischen Anhänger und Straßenfahrzeug durch den Fahrer oder seinen Beifahrer zu verzichten und damit die Einsetzbarkeit und die Wirtschaftlichkeit insbesondere im gewerblichen Straßenverkehr zu verbessern.

Vorzugsweise wird durch geeignete Wahl der Übertragungssysteme bezüglich Hardwareaufbau und Übertragungsfrequenz der Nahbereichsfunkgeräte die Reichweite festgelegt. Beispielsweise werden Frequenzen in den Bereichen oberhalb von 60 GHz bzw.von 2,4 GHz gewählt. Funkübertragungen in diesem Bereich sind regelmäßig auf kurze Reichweiten begrenzt.

Vorzugsweise werden die Nahbereichsfunkgeräte so gewählt, daß sie dem Bluetooth-Standard genügen. Er stellt einen weltweiten Standard dar, der eine flexible Verbindung zwischen mobilen Geräten, beziehungsweise zu stationären Geräten ermöglicht. Insbesondere bei der kurzreichweitigen Ausbildung des Bluetooth-Standards bis etwa 10 Meter ist eine optimierte Übertragung von Informationen zwischen dem Straßenfahrzeug und dem Anhänger gegeben. Dies erfolgt bei einer Frequenz von etwa 2,4 GHz nach dem spread spectrum und dem Frequenz-Hopping-Verfahren. Die Übertragung erfolgt dabei in full-duplex-mode und kann bis zu 1.600 hops/sec zeigen. Durch diese Art der Übertragung nach dem Bluetooth-Standard gelingt es, eine sichere Verbindung zwischen dem Straßenfahrzeug und einem bzw. mehreren unabhängigen Anhängern über entsprechende Bluetooth-Nahbereichsfunkgeräte zu schaffen. Hierbei können neben einfachen Steuerdaten auch umfangreiche sonstige Informationen, insbesondere Videodaten oder Audiodaten übertragen werden. Beispielsweise können von einer im Endbereich des Anhängers angeordneten Kamera Bildinformationen aus dem rückwärtigen Bereich vom Anhänger über sein Nahbereichsfunkgerät zum Nahbereichsfunkgerät des Straßenfahrzeuges übertragen werden und dort auf einem entsprechenden Wiedergabegerät dargestellt werden. Hierdurch gelingt es, das Rückwärtsfahren wesentlich sicherer zu gestalten.

Durch die Möglichkeit, mehrere Anhänger individuell mittels der Funkübertragung über den Bluetooth-Standard anzusprechen, ist es auch möglich, diese erfindungsgemäß zu unterschiedlichen Zeitpunkten mit unterschiedlichen Steuersignalen beispielsweise zur Längs- und Querregelung des Anhängers zu versehen, so daß beispielsweise der Anhänger mit dem größten Abstand von dem Straßenfahrzeug zuerst bremst, während der nächst gelegene Anhänger als letztes bremst. Durch diese Art der Ansteuerung ist ein sehr vorteilhaftes und sichereres Fahrverhalten des Straßenfahrzeuges mit Anhänger gegeben.

Es hat sich besonders bewährt, das Straßenfahrzeug in dem Bereich, welcher dem Anhänger zugewandt ist, das heißt in seinem rückwärtigen Bereich, mit dem Nahbereichsfunkgerät zu versehen bzw. die Antenne des Nahbereichsfunkgerätes in diesem Bereich anzuordnen. In entsprechender Weise hat es sich bewährt, den oder die Anhänger in dem vorderen Bereich, das heißt in dem Bereich, der dem Straßenfahrzeug zugeordnet ist, anzuordnen. Zumindest wird die Antenne des Nahbereichsfunkgerätes in diesem Bereich angeordnet. Durch diese Anordnung des Nahbereichsfunkgerätes in dem Straßenfahrzeug bzw. an dem Anhänger ist eine sehr geringe Entfernung zwischen den Nahbereichsfunkgeräten, insbesondere zwischen deren Antennen gewährleistet, so daß eine sichere Kommunikation zwischen den Funkgeräten gewährleistet ist. Auch ist es möglich, durch diese Anordnung eine sichere Kommunikation zwischen Nahbereichsfunkgeräten mit sehr kurzer Reichweite, insbesondere unter 4 Meter Reichweite, zu erreichen. Hierdurch gelingt es, einen Einfluß bzw. eine Störung der Kommunikation durch andere entsprechende Nahbereichsfunkgeräte während des Betriebes auf der Straße oder auf Parkplätzen durch die sehr kurze Reichweite zu verhindern. Damit ist eine sehr sichere und dauerhafte Kommunikation zwischen dem Straßenfahrzeug und dem Anhänger gegeben. Im Bluetooth-Standard sind Piconetze vorgesehen, in denen mehrere Teilnehmer eingebunden sind. Derzeit arbeitet man an Multinetzen. Damit ist inherent eine Störbarkeit gleichartiger Systeme vermieden.

Es hat sich besonders bewährt, das Straßenfahrzeug in Form einer Zugmaschine auszubilden und den Anhänger in Form eines Trailers, der mit der Zugmaschine verbindbar ist. Erfindungsgemäß ist es nun möglich, sehr schnell einen Trailer gegen einen anderen Trailer auszutauschen und aufgrund der erfindungsgemäß angeordneten Nahbereichsfunkgeräte diese miteinander sehr sicher so in Verbindung treten zu lassen, daß diese sich wechselseitig erkennen und dementsprechende Informationen und Steuerbefehle usw. austauschen können. In diesem Fall kann die Zugmaschine spezifische Informationen des Trailers, z.B. Beladung, Gewicht, Verfallsdaten, Energieverbrauch usw. erhalten und dementsprechend Vorkehrungen treffen, die diesen Informationen entsprechend angepaßt sind.

Die Erfindung betrifft nicht nur ein Straßenfahrzeug mit einem Anhänger, die miteinander über Nahbereichsfunkgeräte über Funkverbindung verbunden sind und über die Funkverbindung Steuerdaten austauschen können, sondern auch das Straßenfahrzeug bzw. den Anhänger für sich alleine, die jeweils durch entsprechende Nahbereichsfunkgeräte in die Lage versetzt sind, mit einem entsprechenden Straßenfahrzeug oder mit einem entsprechenden Anhänger mit einem dementsprechenden Nahbereichsfunkgerät in Funkkontakt zu treten, und somit die Übertragung von Steuerdaten zwischen Straßenfahrzeug und damit verbundenem Anhänger oder auch mehreren Anhängern zu ermöglichen. Auf diese Weise ist ein sehr flexibler Speditionsbetrieb mit wechselnden Anhängern und Straßenfahrzeugen ermöglicht, ohne daß es eine spezielle Kopplung elektrischer Kontakte zur Übertragung von Steuerdaten oder Steuersignalen bedarf.

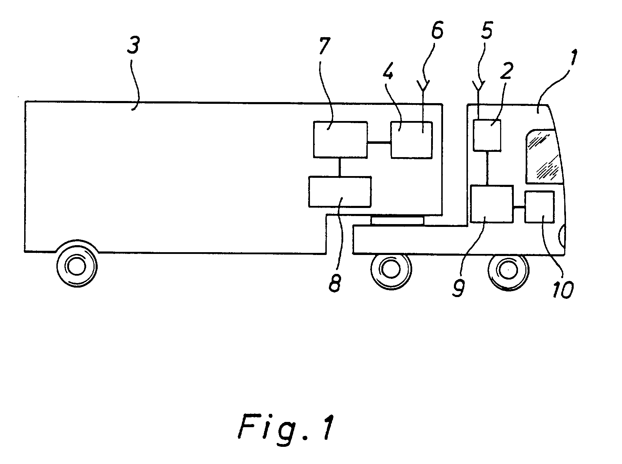

Die Erfindung wird im folgenden anhand einer beispielhaften Ausbildung der Erfindung gemäß der einzigen Figur 1 beschrieben.

Die Erfindung ist nicht auf die vorstehenden beschriebenen Ausbildungen beschränkt. Sie ist auch nicht auf das in Figur 1 dargestellte Beispiel beschränkt.

Figur 1 zeigt ein Straßenfahrzeug 1 mit einem Anhänger 3. Das Straßenfahrzeug 1 ist als Zugmaschine 1 und der Anhänger 3 ist als Trailer 3 ausgebildet. Die Zugmaschine 1 zeigt ein Nahbereichsfunkgerät 2, dem eine Antenne 5 in dem rückwärtigen Bereich der Zugmaschine 1 zugeordnet ist. Der Trailer 3 zeigt ein entsprechendes Nahbereichsfunkgerät 4, dem eine Antenne 6 zugeordnet ist, über welche eine Funkverbindung mit dem Nahbereichsfunkgerät 2 über dessen zugeordnete Antenne 5 ermöglicht ist.

Die Nahbereichsfunkgeräte 2, 4 genügen dem Bluetooth-Standard, wobei die kurzreichweitige Ausbildung mit einer maximalen Reichweite von etwa 10 Meter verwendet wird. Durch die Anordnung der Antenne 5 im rückwärtigen Bereich der Zugmaschine 1 und der Antenne 6 im vorderen Bereich des Trailers 3, also in dem Bereich des Trailers 3, der in verbundenen Zustand der Zugmaschine 1 zugeordnet ist, gelingt es, eine sehr sichere Funkverbindung zwischen den Nahbereichsfunkgeräten 2, 4 zu gewährleisten und eine Beeinträchtigung der Funkverbindung durch ein Einspeisen fremder Funksignale aufgrund der Verwendung des Bluetooth-Standards, insbesondere mit dessen kurzen maximalen Reichweite möglichst auszuschließen.

Auch sind die Antennen 5, 6 so ausgebildet, daß eine Ausgeprägte Richtcharakteristik aufweisen, die einen guten Empfang in Richtung der erwarteten Position des entsprechenden anderen Nahbereichsfunkgerätes 2, 4 ermöglicht bzw. außerhalb dieser eine Störung durch unerwünschte Signale ausschließt. Dabei ist die erwartete Richtung im wesentlichen durch die räumliche Anordnung des Anhängers zum Straßenfahrzeug festgelegt.

Weiterhin gelingt es, durch eine entsprechende Codierung der übertragenen Signale sicherzustellen, daß nur Signale eines akzeptierten, also positiv erkannten, anderen Nahbereichsfunkgerätes, also des zusammengehörigen Nahbereichsfunkgerätes des Trailers 3 bzw. des Nahbereichsfunkgerätes 2 der Zugmaschine 1 ausgewertet werden und zur weiteren Verarbeitung in die den Nahbereichsfunkgeräten 2, 4 zugeordneten Steuereinheiten 7, 9 zugeführt werden. Durch diese Ausbildung ist eine Störung durch Funksignale anderer nicht erwünschter Funkgeräte weitgehend ausgeschlossen.

Über die Funkverbindung zwischen den Nahbereichsfunkgeräten 2, 4 werden verschiedenste Steuerdaten übertragen, die unter anderem für die Steuerung einzelner Komponenten der Zugmaschine 1 oder einzelner Komponenten des Trailers 3 verwendet werden. Beispielsweise wird über die Funkverbindung mittels entsprechender Steuerdaten das Bremslicht am Trailer 3 so gesteuert, daß es aufleuchtet, sobald in der Zugmaschine 1 die Bremse betätigt wird bzw. es erlischt, sobald die Bremse nicht mehr aktiviert ist. Umgekehrt werden von dem Trailer 3 zu der Zugmaschine 1 über die Funkverbindung Steuerdaten übertragen, die beispielsweise die Kühltemperatur in dem Trailer 3 wiedergeben, so daß der Fahrer in der Zugmaschine 1 stets über den Zustand der Ladung in dem Trailer 3 informiert ist und bei Bedarf entsprechende Maßnahmen in die Wege leiten kann.

Weiterhin zeigt der Trailer 3 wie auch die Zugmaschine 1 jeweils ein Einbruch-Diebstahl-Warngerät 8, 10, welche mit den Steuereinheiten 7, 9 verbunden sind. Das Einbruch-Diebstahl-Warngerät zeigt eine Sensor-Einheit zur Feststellung eines Einbruchs bzw. eines Diebstahls des Trailers 3 bzw. der Zugmaschine 1 sowie eine Positionsbestimmungseinheit mit einem sogenannten GPS-Modul sowie mit einem GSM-Sendemodul. Das GSM-Sendemodul ist mit der Antenne 5, 6 verbunden und kann über diese ein Notruf unter Angabe der aktuellen Position absetzen. Mit Hilfe dieses mittels GSM versandten Notrufes läßt sich die Zugmaschine 1 oder der Trailer 3 sicher orten und wieder auffinden. Im Rahmen der Diebstahlserkennung wird unter anderem auch auf das überraschende Abbrechen der Funkverbindung zwischen den Nahbereichsfunkgeräten 2, 4 zurückgegriffen, um einen Diebstahl zu identifizieren.

Mit der erfindungsgemäßen Zugmaschine 1 und mit dem erfindungsgemäßen Trailer 3 gelingt es, auf Kabel zur Übertragung von Steuerdaten zwischen der Zugmaschine 1 und dem Trailer 3 sowie auf entsprechende Verbindungselemente zur mechanischen und elektrischen Verbindung des elektrischen Kabel zu verzichten und dadurch die mechanische und chemische Anfälligkeit derartiger Kabel und Verbindungselemente zu überwinden und das Verbinden und Übertragen von Steuerdaten sicherer zu gestalten. Darüber hinaus gelingt es durch diese Art der Verbindung ein schnelleres Wechseln der Anhänger 3 respektive des Trailers 3 zu ermöglichen und diese individuell erkennbar zu machen, ohne daß aufwendige mechanische Identifizierungen der Verbindungselemente der elektrischen Kabel notwendig sind.

## Patentansprüche

1. Straßenfahrzeug mit wenigstens einem Anhänger, **dadurch gekennzeichnet, daß** das Straßenfahrzeug (1) mit einem Nahbereichsfunkgerät (2) und der Anhänger (3) mit einen entsprechenden zweiten Nahbereichsfunkgerät (4) zur Schaffung einer Funkverbindung zur Übertragung von Steuerdaten zwischen Straßenfahrzeug (1) und Anhänger (3) versehen sind.

2. Straßenfahrzeug nach Anspruch 1, **dadurch gekennzeichnet, daß** das Straßenfahrzeug (1) in einem dem Anhänger (3) zugewandten Bereich eine dem Nahbereichsfunkgerät (2) zugeordnete Antenne (5) aufweist.

3. Straßenfahrzeug nach Anspruch 1 oder 2, **dadurch gekennzeichnet, daß** der Anhänger (3) in einem dem Straßenfahrzeug (1) zugewandten Bereich eine dem Nahbereichsfunkgerät (4) zugeordnete Antenne (6) aufweist.

4. Straßenfahrzeug nach einem der vorstehenden Ansprüche, **dadurch gekennzeichnet, daß** das Straßenfahrzeug (1) eine Zugmaschine (1) und der Anhänger (3) ein Trailer (3) sind.

5. Straßenfahrzeug nach einem der vorstehenden Ansprüche, **dadurch gekennzeichnet, daß** die Funkgeräte (2, 4) eine Reichweite unter 20 m insbesondere unter 4 Meter aufweisen.

6. Straßenfahrzeug nach einem der vorstehenden Ansprüche, **dadurch gekennzeichnet, daß** die Nahbereichsfunkgeräte (2, 4) geeignet sind Funkverbindungen ausschließlich zwischen ausgewählten Nahbereichsfunkgeräten (2, 4) zu ermöglichen.

7. Straßenfahrzeug nach einem der vorstehenden Ansprüche, **dadurch gekennzeichnet, daß** die Nahbereichsfunkgeräte (2, 4) dem Bluetooth-Standard genügen.

8. Straßenfahrzeug nach einem der vorstehenden Ansprüche, **dadurch gekennzeichnet, daß** es mit mehreren Anhängern (3) mit jeweils einem Nahbereichsfunkgeräte (4) versehen ist, zu denen jeweils eine selektive Funkverbindung vom Nahbereichsfunkgerät (2) schaffbar ist.

9. Straßenfahrzeug **dadurch gekennzeichnet, daß** das Strassenfahrzeug (1) mit einem Nahbereichsfunkgerät (2) zur Schaffung einer Funkverbindung zur Übertragung von Steuerdaten zwischen dem Straßenfahrzeug (1) und einem Anhänger (3) mit einen entsprechenden zweiten Nahbereichsfunkgerät (4) versehen ist.

10. Anhänger für ein Straßenfahrzeug **dadurch gekennzeichnet, daß** der Anhänger (3) mit einem Nahbereichsfunkgerät (4) zur Schaffung einer Funkverbindung zur Übertragung von Steuerdaten zwischen einen Straßenfahrzeug (1) und dem Anhänger (3) mit einen entsprechenden Nahbereichsfunkgerät (2) versehen ist.
